# EUROPÄISCHE PATENTSCHRIFT

(11) **EP 3 819 495 B1**
(45) Veröffentlichungstag und Bekanntmachung des Hinweises auf die Patenterteilung: **26.04.2023**
(21) Anmeldenummer: 20206131.3
(22) Anmeldetag: 06.11.2020
(51) Int. Cl.: F03D 1/06, F03D 7/02, B64C 9/00, B64C 9/02, B64C 9/14, B64C 9/32, B64C 13/48, B64C 27/72

(54) **AKTIVIERUNGSANORDNUNG FÜR BEWEGBARE KLAPPVORRICHTUNGEN**
ACTIVATION ARRANGEMENT FOR FOLDING DEVICES
DISPOSITIF D'ACTIVATION POUR DISPOSITIFS RABATTABLES MOBILES

(30) Priorität: 08.11.2019 DE 202019106227 U
(43) Veröffentlichungstag der Anmeldung: 12.05.2021
(73) Patentinhaber: REHAU Industries SE & Co. KG, 95111 Rehau (DE)
(72) Erfinder: Goldstein, Jörg, 95028 Hof (DE); Pardos, Santiago, 95100 Selb (DE)

(56) Entgegenhaltungen:
- EP-A1- 2 549 097
- EP-A1- 3 667 068
- DE-A1-102015 017 127
- US-A- 5 326 050
- US-A1- 2011 272 532
- US-A1- 2018 010 579
- US-A1- 2018 171 975
- US-A1- 2019 186 463

## Beschreibung

Die Erfindung betrifft eine Aktivierungsanordnung für bewegbare Klappvorrichtungen, insbesondere für eine Tragfläche, Rotorblatt und dergleichen, die eine Druckseite und eine Saugseite aufweisen, wobei die Tragfläche, Rotorblatt und dergleichen wenigstens eine Ausnehmung sowie wenigstens eine Luftleitanordnung aufweist.

Derartige Aktivierungsanordnungen für bewegbare Klappvorrichtungen, insbesondere für eine Tragfläche, Rotorblatt und dergleichen sind im Stand der Technik bereits bekannt und haben sich im der Praxis erfolgreich bewährt.

So offenbart bspw. DE 102011011084 A1 ein Rotorblatt mit einem sich in Längsrichtung des Rotorblatts erstreckenden Hauptteil, das ein aerodynamisches Profil, eine Druckseite, eine Saugseite, eine Vorderkante und eine Hinterkante aufweist und einer ausfahrbaren Blattvergrößerung, die ein roll- oder faltbares, flächiges Element und eine Aufnahmeeinrichtung innerhalb des Hauptteils aufweist, wobei das flächige Element in einer eingefahrenen Stellung der Blattvergrößerung von der Aufnahmeeinrichtung aufgenommen ist und sich in einer ausgefahrenen Stellung der Blattvergrößerung von der Hinterkante nach hinten erstreckt und die aerodynamisch wirksame Fläche des Rotorblatts vergrößert, wobei mindestens zwei Tragarme in oder an dem Hauptteil geführt und nach hinten ausfahrbar sind, an deren hinteren Enden das flächige Element befestigt ist. US2018/171975 A1 offenbart eine bekannte Rückstromklappe bei einer Windkraftanlage.

Nachteilig bei diesen Aktivierungsanordnungen wird gesehen, dass dieses kostenintensiv sowohl in der Herstellung als auch in der Montage ist.

Ein weiterer Nachteil besteht darin, dass insbesondere bei Verwendung von Aktivierungsanordnungen beispielsweise mit elektrischer Leitungen eine Anfälligkeit für Blitzschläge gegeben ist, die die Funktion infrage stellen.

Ebenfalls nachteilig bei den Aktivierungsanordnungen für bewegbare Klappvorrichtungen, insbesondere für eine Tragfläche, Rotorblatt und dergleichen aus dem Stand der Technik ist, dass beispielsweise bei direkt angesteuerten Klappen über hydraulische Systeme diese immer vollkommen dicht sein und entsprechend hohe Drücke aushalten müssen. Bei bestimmungsgemäßer Verwendung entstehen jedoch auch Undichtigkeiten, die neben dem Ausfall der Funktion der Aktivierungsanordnungen auch durch das austretende Öl zu einer Kontamination der Umwelt führen können.

Von daher hat sich die Erfindung die Aufgabe gestellt, die Nachteile des bekannten Standes der Technik zu überwinden und eine Aktivierungsanordnung für bewegbare Klappvorrichtungen, insbesondere für eine Tragfläche, Rotorblatt und dergleichen aufzuzeigen, welche kostengünstig und wirtschaftlich herstellbar ist, deren aerodynamisch wirksame Fläche mithilfe einer Luftleitanordnung optimierbar ist und die flexibel an verschiedenste Windbedingungen anpassbar ist, sowie bewegbare Clubvorrichtungen, insbesondere für eine Tragfläche, Rotorblatt und dergleichen mit einer derartigen Aktivierungsanordnung. Erfindungsgemäß wird diese Aufgabe durch die Merkmale des Anspruches 1 sowie des

Anspruches 11 gelöst. Weitere vorteilhafte Ausgestaltungen sind in den Unteransprüchen beschrieben.

Überraschend hat sich herausgestellt, dass ein Aktivierungsanordnung für bewegbare Klappvorrichtungen, insbesondere für eine Tragfläche, Rotorblatt und dergleichen, sich dadurch auszeichnet, dass die Luftleitanordnung wenigstens ein Basiselement, wenigstens ein Aktuatorelement sowie wenigstens ein Luftleitelement aufweist, dass das Basiselement in wenigstens einer Ausnehmung angeordnet ist, dass wenigstens ein freies Ende des Luftleitelementes am Basiselement angeordnet ist, dass das Luftleitelement mit dem Basiselement wenigstens einen Aufnahmeraum umschließt, in dem das Aktuatorelement angeordnet ist. Mit der erfindungsgemäßen Aktivierungsanordnung für bewegbare Klappvorrichtungen, insbesondere für eine Tragfläche, Rotorblatt und dergleichen ist es somit erstmals möglich, neben einer kostengünstigen und wirtschaftlichen Herstellung die aerodynamisch wirksame Fläche durch eine Luftleitanordnung so zu gestalten, dass das Luftleitelement durch ein Aktuatorelement in seiner Position veränderbar ist bzw. dass durch das Eigengewicht bzw. durch eine Vorspannung des Luftleitelementes das Volumen des Aktuatorelements veränderbar bzw. anpassbar ist. Weiterhin ist bei der erfindungsgemäßen Aktivierungsanordnung die Luftleitanordnung sehr einfach und kostengünstig austauschbar. Es liegt aber auch im Rahmen der Erfindung, dass die Luftleitanordnung an bestehende Aktivierungsanordnungen für bewegbare Klappvorrichtungen, insbesondere für eine Tragfläche, Rotorblatt und dergleichen wirtschaftlich und kostengünstig anbringbar ist.

Es hat sich als vorteilhaft herausgestellt bei der erfindungsgemäßen Aktivierungsanordnung, dass die Luftleitanordnung in wenigstens einer Ausnehmung der Saugseite angeordnet ist. Hierdurch ist einerseits eine wirtschaftliche und kostengünstige Montage möglich, während andererseits auch die aerodynamisch wirksame Fläche für bewegbare Klappvorrichtungen, insbesondere für eine Tragfläche, Rotorblatt und dergleichen den entsprechenden Windbedingungen optimal anpassbar ist.

In einer weiteren vorteilhaften Ausgestaltung der erfindungsgemäßen Aktivierungsanordnung für bewegbare Klappvorrichtungen, insbesondere für eine Tragfläche, Rotorblatt und dergleichen weist das Luftleitelement der Luftleitanordnung wenigstens ein Verstärkungselement auf. Dies führt vorteilhafterweise dazu, dass entsprechend den Abmessungen hinsichtlich der Spannweite bzw. der Breite/Länge entsprechend optimierte Luftleit-anordnungen zur Verfügung stellbar sind.

In einer ebenfalls vorteilhaften Ausführungsform der erfindungsgemäßen Aktivierungsanordnung für bewegbare Klappvorrichtungen, insbesondere für eine Tragfläche, Rotorblatt und dergleichen weist das Luftleitelement der Luftleitanordnung eine fertigungsbedingte Vorspannung von wenigstens 5 N/m² auf. Vorspannung im Sinne dieses Merkmal ist eine ohne äußere Belastung im Bauteil vorhandene mechanische Spannung, die bei Produktion oder Montage eingebracht wird, um im Lastfall das gewünschte Verhalten zu erreichen. Durch diese vorteilhafte Ausgestaltung ist das Luftleitelement so dimensionierbar, dass es unterschiedlich gestaltete/dimensionierte Aktuatorelemente dekomprimiert.

Weiterhin vorteilhaft bei der erfindungsgemäßen Aktivierungsanordnung für bewegbare Klappvorrichtungen, insbesondere für eine Tragfläche, Rotorblatt und dergleichen ist, dass das Basiselement der Luftleitanordnung wenigstens eine Arretiervorrichtung aufweist. Dadurch ist die Luftleitanordnung wirtschaftlich sowie kostengünstig montierbar und ist auf bestehende, bewegbare Klappvorrichtungen, insbesondere für eine Tragfläche, Rotorblatt und dergleichen problemlos montierbar bzw. fixierbar.

Ein Vorteil der erfindungsgemäßen Aktivierungsanordnung für bewegbare Klappvorrichtungen, insbesondere für eine Tragfläche, Rotorblatt und dergleichen ist, dass das Aktuatorelement der Luftleitanordnung wenigstens eine, von wenigstens einer Wand umschlossene, Hohlkammer aufweist. Durch diese vorteilhafte Ausgestaltung sind insbesondere Aktuator-elemente zur Verfügung stellbar, die an die unterschiedlichsten Geometrien für bewegbare Klappvorrichtungen, insbesondere für eine Tragfläche, Rotorblatt und dergleichen problemlos optimierbar bzw. anpassbar sind.

Ebenfalls vorteilhaft bei der erfindungsgemäßen Aktivierungsanordnung für bewegbare Klappvorrichtungen, insbesondere für eine Tragfläche, Rotorblatt und dergleichen ist, dass das Aktuatorelement der Luftleitanordnung wenigstens eine Fixiervorrichtung aufweist. Hierdurch ist das Aktuatorelement wirtschaftlich sowie kostengünstig herstellbar und einfach in der Luftleitanordnung montierbar.

Es hat sich weiterhin als vorteilhaft herausgestellt, dass die Fixiervorrichtung des Aktuatorelements mit wenigstens einer Arretiervorrichtung des Basiselements in Wirkverbindung steht. Durch diese vorteilhafte Ausgestaltung ist eine einfache und schnelle Montage der einzelnen Elemente der Luftleitanordnung problemlos möglich.

Ein weiterer Vorteil der erfindungsgemäßen Aktivierungsanordnung für bewegbare Klappvorrichtungen, insbesondere für eine Tragfläche, Rotorblatt und dergleichen ist, dass das Basiselement und/oder das Aktuatorelement und/oder das Luftleitelement aus einem polymeren Werkstoff und/oder einem duromeren Werkstoff und/oder einen metallischen Werkstoff und/oder aus Kombinationen dieser Werkstoffe hergestellt ist. Hierdurch ist sowohl eine wirtschaftliche und kostengünstige Herstellung der einzelnen Elemente der Luftleitanordnung realisierbar als auch deren einfache Montage.

In einer weiteren vorteilhaften Ausführungsform der erfindungsgemäßen Aktivierungsanordnung für bewegbare Klappvorrichtungen, insbesondere für eine Tragfläche, Rotorblatt und dergleichen ist das Aktuatorelement aus einem weichelastischem, polymeren Werkstoff hergestellt, mit einer Härte Shore A gemäß DIN EN ISO 868 von etwa 50 - 95, bevorzugt 60 - 90. Durch diese materialbedingten Variationen insbesondere des Aktuatorelements ist die Funktionsfähigkeit der bewegbaren Klappvorrichtungen, insbesondere für eine Tragfläche, Rotorblatt und dergleichen problemlos anpassbar bzw. optimierbar. Es konnte weiterhin festgestellt werden, dass bei der erfindungsgemäßen Aktivierungsanordnung das Aktuatorelement wenigstens teilweise einen polymeren Werkstoff aufweist, ausgewählt aus der Gruppe der Thermoplastischen Elastomere bspw. auf Olefinbasis und/oder auf Urethanbasis, der vernetzten thermoplastischen Elastomere auf Olefinbasis, der Thermoplastischen Copolyester, der Styrol-Blockcopolymere (SBS, SEBS, SEPS, SEEPS und MBS) sowie der Thermoplastischen Copolyamide. Weiterhin der weihmacherhaltigen Werkstoffe, bevorzugt Polypropylen, Acrylnitril-Butadien-Styrol-Copolymerisat, Polycarbonat, Polyvinylchlorid, Polymethylmethacrylat, Polyethylenterephthalat, Polyurethan und dgl., sowie aus Mischungen dieser Werkstoffe.

Erfindungsgemäß weist das Aktuatorelement wenigstens ein, stoffschlüssig an diesem, in Profillängsrichtung angeordnetes, Distanzelement auf. Dieses gewährleistet die Funktion des Aktuatorelements, indem es insbesondere im komprimierten Zustand, bei dem die Hohlkammer nicht mehr erkennbar ist, ein anhaften bzw. ankleben der Wand an sich selbst verhindert bzw. auch an dem daran angeordneten Luftleitelement.

Die Erfindung betrifft weiterhin bewegbare Klappvorrichtungen, insbesondere für eine Tragfläche, Rotorblatt und dergleichen mit wenigstens einer Aktivierungsanordnung gemäß den vorherigen Ausführungen.

Die Erfindung soll nun an diesen, nicht einschränkenden, Ausführungsbeispielen näher beschrieben werden.

Es zeigen:
- Figur 1:: Schnittdarstellung eines Ausschnittes einer Aktivierungsanordnung für bewegbare Klappvorrichtungen mit einer Luftleitanordnung im geschlossenen Zustand
- Figur 2:: Schnittdarstellung eines Ausschnittes einer Aktivierungsanordnung für bewegbare Klappvorrichtungen mit einer Luftleitanordnung im geöffneten Zustand

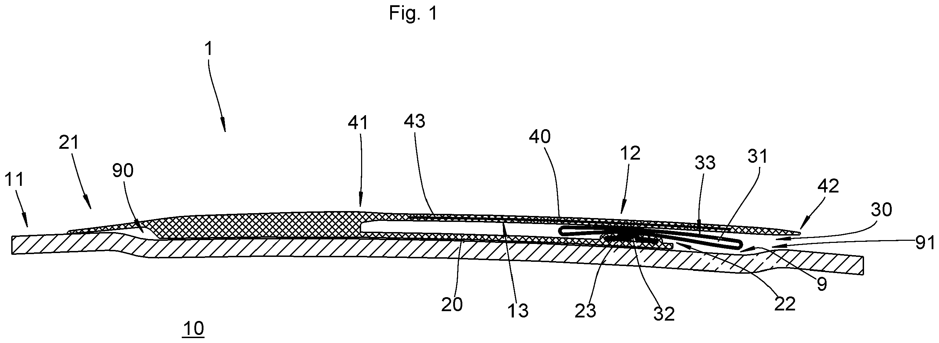

In der Figur 1 ist eine Schnittdarstellung eines Ausschnittes einer Aktivierungsanordnung für bewegbare Klappvorrichtungen 1, insbesondere für eine Tragfläche, Rotorblatt und dergleichen mit einer Luftleitanordnung 12 im geschlossenen Zustand dargestellt.

Die Luftleitanordnung 12 weist dabei ein Basiselement 20, wenigstens ein Aktuatorelement 30 sowie wenigstens ein Luftleitelement 40 auf.

Das Basiselement 20 ist in einer Ausnehmung 9 angeordnet. Die Ausnehmung 9 befindet sich auf der Saugseite 11 insbesondere für eine Tragfläche, Rotorblatt und dergleichen.

Die Saugseite 11 insbesondere für eine Tragfläche, Rotorblatt und dergleichen ist gegenüberliegend der Druckseite 10 angeordnet.

Das freie Ende 41 des Luftleitelementes 40 ist dabei am Basiselement 20 angeordnet.

Das Luftleitelement 40 umschließt mit dem Basiselement 20 wenigstens einen Aufnahmeraum 13, indem das Aktuatorelement 30 angeordnet ist.

Weiterhin ist das Luftleitelement 40 der Luftleitanordnung 12 so ausgebildet, dass es eine fertigungsbedingte Vorspannung von wenigstens 5 N/m² aufweist. Das Luftleitelement 40 der Luftleitanordnung 12 überdeckt das im Aufnahmeraum 13 angeordnete Aktuatorelement 30 so, dass die Hohlkammer 31 des Aktuatorelements 30 im Querschnitt ihr geringstes Volumen aufweist. Die, die Hohlkammer 31 des Aktuatorelements 30 umschließende, Wand 33 liegt dabei nahezu direkt aneinander an.

Das Basiselement 20 der Luftleitanordnung 12 weist wenigstens eine Arretiervorrichtung 23 auf.

In diesem Ausführungsbeispiel ist das Luftleitelement 40 so ausgebildet, dass es an seinem freien Ende 41 am freien Ende 90 der Ausnehmung 9 angeordnet ist.

Das Luftleitelement 40 der Luftleitanordnung 12 ist so ausgebildet, dass es wenigstens ein Verstärkungselement 43 aufweist. In diesem Ausführungsbeispiel ist das Luftleitelement 40 aus einem polymeren Werkstoff auf Basis eines Styrol-Copolymeren hergestellt und das Verstärkungselement 43 ein sogenanntes Organoblech.

Im Aufnahmeraum 13 der Luftleitanordnung 12 ist das Aktuatorelement 30 angeordnet.

Das Aktuatorelement 30 weist dabei eine Fixiervorrichtung 32 auf.

Die Fixiervorrichtung 32 des Aktuatorelement 30 steht dabei mit der Arretiervorrichtung 23 des Basiselementes 20 in Wirkverbindung.

Das Aktuatorelement 30 der Luftleitanordnung 12 weist wenigstens eine, von wenigstens einer Wand 33 umschlossene, Hohlkammer 31 auf.

Weiterhin ist das Aktuatorelement 30 der Luftleitanordnung 12 so angeordnet, dass es die Arretiervorrichtung 23 des Basiselementes 20 wenigstens teilweise überdeckt.

Das Aktuatorelement 30 der Luftleitanordnung 12 ist weiter so angeordnet, das ist das freie Ende 91 der Ausnehmung 9 der Klappvorrichtung 1 wenigstens teilweise überdeckt.

Das Basiselement 20 und/oder das Aktuatorelement 30 und/oder das Luftleitelement 40 sind aus einem polymeren und/ oder duromeren Werkstoff hergestellt.

Das Aktuatorelement 30 der Luftleitanordnung 12 ist dabei aus einem weichelastischem, polymeren Werkstoff, in diesem Ausführungsbeispiel aus einem thermoplastischen Polyurethan (TPU), mit einer Härte Shore A gemäß DIN EN ISO 868 von etwa 85 hergestellt. Es liegt jedoch auch im Rahmen der Erfindung, dass das Aktuatorelement 30 aus einem weichelastischen, polymeren Werkstoff ausgewählt aus der Gruppe der Thermoplastischen Elastomere bspw. auf Olefinbasis und/oder auf Urethanbasis, der vernetzten thermoplastischen Elastomere auf Olefinbasis, der Thermoplastischen Copolyester, der Styrol-Blockcopolymere (SBS, SEBS, SEPS, SEEPS und MBS) sowie der Thermoplastischen Copolyamide. Weiterhin der weihmacherhaltigen Werkstoffe, bevorzugt Polypropylen, Acrylnitril-Butadien-Styrol-Copolymerisat, Polycarbonat, Polyvinylchlorid, Polymethyl-methacrylat, Polyethylenterephthalat, Polyurethan und dgl., sowie aus Mischungen dieser Werkstoffe hergestellt ist.

Bei bestimmungsgemäßen Einsatz ist die Luftleitanordnung 12 so ausgebildet, dass das Luftleitelement 40 mit einer fertigungsbedingten Vorspannung von etwa 5 N/m² das Aktuatorelement 30 so zusammenpresst ist, dass die Hohlkammer 31 ihr minimal notwendiges Volumen aufweist.

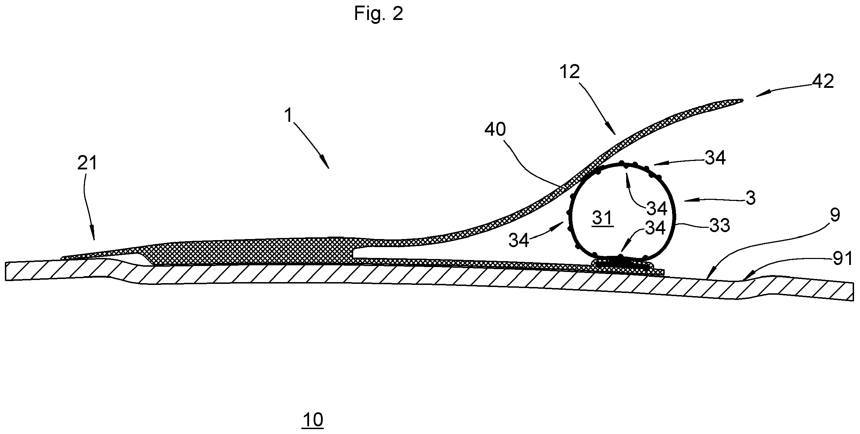

In der Figur 2 ist eine Schnittdarstellung eines Ausschnittes einer Aktivierungsanordnung für bewegbare Klappvorrichtungen 1, insbesondere für eine Tragfläche, Rotorblatt und dergleichen mit einer Luftleitanordnung 12 im geöffneten Zustand dargestellt.

Die Luftleitanordnung 12 weist dabei ein Basiselement 20, wenigstens ein Aktuatorelement 30 sowie wenigstens ein Luftleitelement 40 auf. Das Basiselement 20 ist dabei in einer Ausnehmung 9 angeordnet. Die Ausnehmung 9 befindet sich auf der Saugseite 11 insbesondere für eine Tragfläche, Rotorblatt und dergleichen. Die Saugseite 11 insbesondere für eine Tragfläche, Rotorblatt und dergleichen ist gegenüberliegend der Druckseite 10 angeordnet.

Das Aktuatorelement 30 der Luftleitanordnung 12 weist wenigstens eine, von wenigstens einer Wand 33 umschlossene, Hohlkammer 31 auf.

Weiterhin weist das Aktuatorelement 30 der Luftleitanordnung 12 wenigstens ein, stoffschlüssig an diesem, in Profillängsrichtung angeordnetes, Distanzelement 34 auf.

In diesem Ausführungsbeispiel sind Distanzelemente 34 in der Hohlkammer 31 des Aktuatorelements 30 angeordnet.

Weiterhin weist die Wand 33 des Aktuatorelements 30 Distanzelemente 34 auf, die nach außen, von der Hohlkammer 31 wegweisend, aber und auch nach innen, in die Hohlkammer 31 weisend, angeordnet sind.

Durch eine Gas- und/oder elektrische/oder Fluid- induzierte Aktivierung des Aktuatorelements 30 erhöht sich das Volumen der Hohlkammer 31 und das Luftleitelement 40 wird von der Saugseite 11, von dieser beabstandet, angeordnet. Hierdurch ist eine Beeinflussung einer Rotationsbewegung, insbesondere für eine Tragfläche, Rotorblatt und dergleichen durch die Aktivierungsanordnung möglich.

Nach der Entspannung/ Dekompression der Hohlkammer 31 des Aktuatorelements 30 reduziert sich das Volumen der Hohlkammer 31 und das Luftleitelement 40 liegt nahezu flächenbündig an der Saugseite 11 an.

Somit ist eine Aktivierungsanordnung für bewegbare Klappvorrichtungen 1, insbesondere für eine Tragfläche, Rotorblatt und dergleichen zur Verfügung stellbar, welche kostengünstig und wirtschaftlich herstellbar ist, deren aerodynamisch wirksame Fläche mithilfe einer Luftleitanordnung 12 optimierbar ist und die flexibel an verschiedenste Wind-bzw. Wetterbedingungen anpassbar ist.

## Patentansprüche

1. Aktivierungsanordnung für bewegbare Klappvorrichtungen (1), für eine Tragfläche, Rotorblatt, die eine Druckseite (10) und eine Saugseite (11) aufweisen, wobei die Tragfläche, Rotorblatt wenigstens eine Ausnehmung (9) sowie wenigstens eine Luftleitanordnung (12) aufweist, wobei die Luftleitanordnung (12) wenigstens ein Basiselement (20), wenigstens ein Aktuatorelement (30), sowie wenigstens ein Luftleitelement (40) aufweist, wobei das Basiselement (20) in wenigstens der Ausnehmung (9) angeordnet ist, wobei wenigstens ein freies Ende (41) des Luftleitelementes (40) am Basiselement (20) angeordnet ist, wobei das Luftleitelement (40) mit dem Basiselement (20) wenigstens einen Aufnahmeraum (13) umschließt, in dem das Aktuatorelement (30) angeordnet ist, **dadurch gekennzeichnet, dass** das Aktuatorelement (30) wenigstens ein, stoffschlüssig an diesem, in Profillängsrichtung angeordnetes, Distanzelement (34) aufweist.

2. Aktivierungsanordnung nach Anspruch 1, **dadurch gekennzeichnet, dass** die Luftleitanordnung (12) in wenigstens einer Ausnehmung (9) der Saugseite (11) angeordnet ist.

3. Aktivierungsanordnung nach einem der vorhergehenden Ansprüche, **dadurch gekennzeichnet, dass** das Luftleitelement (40) der Luftleitanordnung (12) wenigstens ein Verstärkungselement (43) aufweist.

4. Aktivierungsanordnung nach einem der vorhergehenden Ansprüche, **dadurch gekennzeichnet, dass** das Luftleitelement (40) der Luftleitanordnung (12) eine fertigungsbedingte Vorspannung von wenigstens 5 N/ m² aufweist.

5. Aktivierungsanordnung nach einem der vorhergehenden Ansprüche, **dadurch gekennzeichnet, dass** das Basiselement (20) der Luftleitanordnung (12) wenigstens eine Arretiervorrichtung (23) aufweist.

6. Aktivierungsanordnung nach einem der vorhergehenden Ansprüche, **dadurch gekennzeichnet, dass** das Aktuatorelement (30) der Luftleitanordnung (12) wenigstens eine, von wenigstens einer Wand (33) umschlossene, Hohlkammer (31) aufweist.

7. Aktivierungsanordnung nach einem der vorhergehenden Ansprüche, **dadurch gekennzeichnet, dass** das Aktuatorelement (30) der Luftleitanordnung (12) wenigstens eine Fixiervorrichtung (32) aufweist.

8. Aktivierungsanordnung nach einem der vorhergehenden Ansprüche, **dadurch gekennzeichnet, dass** die Fixiervorrichtung (32) des Aktuatorelements (30) mit wenigstens einer Arretiervorrichtung (23) des Basiselements (20) in Wirkverbindung steht.

9. Aktivierungsanordnung nach einem der vorhergehenden Ansprüche, **dadurch gekennzeichnet, dass** das Basiselement (20) und /oder das Aktuatorelement (30) und/ oder das Luftleitelement (40) aus einem polymeren Werkstoff und/ oder einem duromeren Werkstoff und/oder einem metallischen Werkstoff und/oder aus Kombinationen dieser Werkstoffe hergestellt ist.

10. Aktivierungsanordnung nach einem der vorhergehenden Ansprüche, **dadurch gekennzeichnet, dass** das Aktuatorelement (30) aus einem weichelastischem, polymeren Werkstoff mit einer Härte Shore A gemäß DIN EN ISO 868 von etwa 50 bis 95, bevorzugt 60 bis 90 hergestellt ist.

11. Bewegbare Klappvorrichtungen (1), für eine Tragfläche, Rotorblatt mit wenigstens einer Aktivierungsanordnung nach einem der Ansprüche 1 bis 10.

## Claims

1. Activation arrangement for moveable flap devices (1), for an airfoil, rotor blade, which comprise a pressure side (10) and a suction side (11), wherein the airfoil, rotor blade comprises at least one recess (9) and at least one air guide arrangement (12), wherein the air guide arrangement (12) comprises at least one base element (20), at least one actuator element (30), and at least one air guide element (40), wherein the base element (20) is arranged in at least the recess (9), wherein at least one free end (41) of the air guide element (40) is arranged on the base element (20), wherein the air guide element (40) with the base element (20) encloses at least one receiving space (13) in which the actuator element (30) is arranged, **characterized in that** the actuator element (30) comprises at least one spacer element (34) arranged integrally thereon in the profile longitudinal direction.

2. Activation arrangement according to claim 1, **characterized in that** the air guide arrangement (12) is arranged in at least one recess (9) of the suction side (11).

3. Activation arrangement according to one of the preceding claims, **characterized in that** the air guide element (40) of the air guide arrangement (12) comprises at least one reinforcing element (43).

4. Activation arrangement according to one of the preceding claims, **characterized in that** the air guide element (40) of the air guide arrangement (12) comprises a production-related prestress of at least 5 N/m².

5. Activation arrangement according to one of the preceding claims, **characterized in that** the base element (20) of the air guide arrangement (12) comprises at least one arresting device (23).

6. Activation arrangement according to one of the preceding claims, **characterized in that** the actuator device (30) of the air guide arrangement (12) comprises at least one hollow chamber (31) enclosed by at least one wall (33).

7. Activation arrangement according to one of the preceding claims, **characterized in that** the actuator element (30) of the air guide arrangement (12) comprises at least one fixing device (32).

8. Activation arrangement according to one of the preceding claims, **characterized in that** the fixing device (32) of the actuator element (30) is in operative connection with at least one arresting device (23) of the base element (20).

9. Activation arrangement according to one of the preceding claims, **characterized in that** the base element (20) and/or the actuator element (30) and/or the air guide element (40) is produced from a polymer material and/or a thermoset material and/or a metal material and/or combinations of said materials.

10. Activation arrangement according to one of the preceding claims, **characterized in that** the actuator element (30) is produced from a soft-elastic, polymer material having a Shore-A hardness according to DIN EN ISO 868 of around 50 to 95, preferably 60 to 90.

11. Moveable flap devices (1) for an airfoil, rotor blade having at least one activation arrangement according to one of claims 1 to 10.

## Revendications

1. Ensemble d'activation pour dispositifs rabattables mobiles (1), pour une surface de support, une pale de rotor, qui présentent un côté sous pression (10) et un côté aspiration (11), dans lequel la surface de support, pale de rotor, présente au moins un évidement (9) ainsi qu'au moins en ensemble de guidage d'air (12), dans lequel l'ensemble de guidage d'air (12) présente au moins un élément de base (20), au moins un élément d'actionnement (30) ainsi qu'au moins un élément de guidage d'air (40), dans lequel l'élément de base (20) est disposé dans au moins l'évidement (9), dans lequel au moins une extrémité libre (41) de l'élément de guidage d'air (40) est disposée sur l'élément de base (20), dans lequel l'élément de guidage d'air (40) entoure avec l'élément de base (20) au moins un espace de logement (13) dans lequel l'élément d'actionnement (30) est disposé, **caractérisé en ce que** l'élément d'actionnement (30) présente au moins un élément d'écartement (34) disposé par liaison de manière sur celui-ci dans le sens longitudinal de profilé.

2. Ensemble d'activation selon la revendication 1, **caractérisé en ce que** l'ensemble de guidage d'air (12) est disposé dans au moins un évidement (9) du côté aspiration (11).

3. Ensemble d'activation selon l'une quelconque des revendications précédentes, **caractérisé en ce que** l'élément de guidage d'air (40) de l'ensemble de guidage d'air (12) présente au moins un élément de renforcement (43).

4. Ensemble d'activation selon l'une quelconque des revendications précédentes, **caractérisé en ce que** l'élément de guidage d'air (40) de l'ensemble de guidage d'air (12) présente une précontrainte liée à la fabrication d'au moins 5 N/m².

5. Ensemble d'activation selon l'une quelconque des revendications précédentes, **caractérisé en ce que** l'élément de base (20) de l'ensemble de guidage d'air (12) présente au moins un dispositif d'arrêt (23).

6. Ensemble d'activation selon l'une quelconque des revendications précédentes, **caractérisé en ce que** l'élément d'actionnement (30) de l'ensemble de guidage d'air (12) présente au moins une chambre creuse (31) entourée par au moins une paroi (33).

7. Ensemble d'activation selon l'une quelconque des revendications précédentes, **caractérisé en ce que** l'élément d'actionnement (30) de l'ensemble de guidage d'air (12) présente au moins un dispositif de blocage (32).

8. Ensemble d'activation selon l'une quelconque des revendications précédentes, **caractérisé en ce que** le dispositif de blocage (32) de l'élément d'actionnement (30) coopère avec au moins un dispositif d'arrêt (23) de l'élément de base (20).

9. Ensemble d'activation selon l'une quelconque des revendications précédentes, **caractérisé en ce que** l'élément de base (20) et/ou l'élément d'actionnement (30) et/ou l'élément de guidage d'air (40) sont fabriqués à partir d'un matériau polymère et/ou d'un matériau thermodurcissable et/ou d'un matériau métallique et/ou de combinaisons desdits matériaux.

10. Ensemble d'activation selon l'une quelconque des revendications précédentes, **caractérisé en ce que** l'élément d'actionnement (30) est fabriqué à partir d'un matériau polymère élastique souple avec une dureté Shore A selon la norme DIN ISO 868 d'environ 50 à 95, de manière préférée de 60 à 90.

11. Dispositifs rabattables mobiles (1) pour une surface de support, pale de rotor, avec au moins un ensemble d'activation selon l'une quelconque des revendications 1 à 10.
